# EUROPEAN PATENT SPECIFICATION

(11) **EP 1 599 815 B1**
(45) Date of publication and mention of the grant of the patent: **02.08.2006**
(21) Application number: 04717636.7
(22) Date of filing: 05.03.2004
(51) Int. Cl.: G06F 17/30, G06F 9/44

(54) **A METHOD AND A COMPUTER SYSTEM FOR DATA ASSIGNMENT**
VERFAHREN UND COMPUTERSYSTEM ZUR DATENZUWEISUNG
PROCEDE ET SYSTEME INFORMATIQUE POUR L'AFFECTATION DE DONNEES

(30) Priority: 06.03.2003 DE 10310999; 06.03.2003 DE 10310998; 17.04.2003 WO PCT/EP03/04071
(43) Date of publication of application: 30.11.2005
(60) Divisional application: 06012520.0
(73) Proprietor: SAP AG, 69190 Walldorf (DE)
(72) Inventor: WESTENDORF, Frank, 76698 Ubstadt-Weiher (DE); IHLE, Michael, 76694 Forst (DE); WAASMAIER, Daniel, 69168 Wiesloch (DE); SCHRÖDER, Norbert, 51429 Bergisch-Gladbach (DE)
(74) Representative: Hössle Kudlek & Partner
(86) International application number: PCT/EP2004/002300
(87) International publication number: WO 2004/079475

(56) References cited:
- US-A1- 2002 087 544
- US-B1- 6 341 289

## Description

### Field of the invention

The present invention relates to the field of data assignment and more particularly to a method for data assignment in a computer system as well as a computer system which is suitable to perform data assignment. The invention further relates to a computer program product with a computer-readable medium and a computer program stored on the computer-readable medium with program coding means which are suitable for carrying out such a method when the computer program is run on a computer system.

### Description of the Related Art

In inventory-oriented software solutions which find use in inventory data objects in various business fields a data object component manages a set of (inventory) data objects. A computing unit is interconnected with the data object component via an interface. For purposes of statistical or evaluation nature, it is appropriate to classify data objects of the set of data objects into segments according to selectable criteria so that the computing unit can access selected/classified data objects via specific segment access in order to perform certain tasks.

One example of an inventory-related software solution can be found in the field of insurance companies which use software solutions to manage their insurance contracts and their clients' data. Inventory in this specific example could mean the sum of all insurance contracts and/or the clients of a given insurance company. The data objects describing the insurance contracts and/or the clients are called business objects. A segment is then a subset of business objects of a given business object type. These subsets, i.e. segments, are created by individual assignment or by classifying the business objects according to one or several criteria, such as geographical criteria (e.g. region, county, district), product related criteria (e.g. health insurance, life insurance, car insurance, etc.) or client group criteria (e.g. private client, business client, industrial client). Depending on a given context, a business object can be classified into one or more segments, i.e. belong to one or several subsets. However, within a given context, the relation between the business object and the segment(s) must be unequivocal.

Another example for inventory-related software solutions is in the field of commission systems containing a plurality of commission contracts between a company and its employees or contracting agents.

In order to be able to perform different tasks concerning statistical and evaluational aspects as well as concerning responsibilities and tasks or targets within the organisational structure of a company, it is important that business objects can be easily related to an employee or a contracting agent, or that a relation between a single contract and an inventory (subset) can be created. For example, typical relations can be the responsibility for all life insurance contracts in a given postal code area, the management of all car insurance contracts or the advisory function for all clients with profession physicist in the field of health insurances. It is easily understood by these examples that the segments are not directly created or classified but in connection with a given responsibility or task ("being in charge of", "managing", "advisory function", "contact person" etc.).

In order to be able to create an assignment between a given employee or contracting agent, i.e. the data object of that employee or contracting agent, and a segment, the business data objects in the data object component must contain pointer structures or other suitable reference information. If there are changes to either the business data objects or the employee/agent data objects, the according reference information in the business data object has to be updated, i.e. the data contained in the data object component has to be attended to regularly and reliably. In practice, this is a potential source of malfunctioning as data attendance (or data maintenance) is not always performed in a reliable manner as it is an additional task to be performed by a human operator, and very often there is no direct understanding for the need to perform data maintenance.

[0006a] US 6,341,289 B1 discloses an object identity and partitioning system with a central processing unit (CPU), a relational database and an interface (schema mapper) in which system data objects may be partitioned with the schema mapper using partition key values in order to facilitate partitioning, wherein the partition key values are retrieved when new owned objects are created in order to determine the partition in which the new owned object belongs.

### Summary of the Invention

It is therefore an aspect of the invention to provide a data assignment system which allows for faster and more reliable access to related segments. This aspect is achieved by proposing a method for data assignment with the features of claim 1 and a computer system for data assignment with the features of claim 10.

Accordingly, an interface unit is provided which interconnects the computing unit and the data object component, the interface unit being arranged and constructed to include an inventory assignment of segments created in the data object component. This allows that, in case of an assignment enquiry by the computing unit, an assignment of one or more segments being inquired for be carried out in the interface unit. Accordingly, the invention provides for operational systems to be able to determine for a given business object in connection with the responsibility the responsible employee/agent, or more generally speaking to determine for a given (classified) data object in connection with a relation the related data object in the operational system of the computing unit.

In a possible embodiment of the invention, the interface unit may contain segment relations for the (business) data objects contained in the data object component. The segment relations can be based on keys or key terms which may be published, or on rules. The classification of data objects into segments is then based on given rules, on keys or - alternatively - on individual assignment. It is therefore an important advantage of the invention that any kind of segment relation rules have not to be input, stored and maintained to in the data object component but are fully manageable in the interface unit according to the invention.

For the mapping of segments, the system and method according to the invention may provide for customized definition of individual segment types. Each segment type represents a certain segmentation (classification). The segments of a segment type form delimited segments according to given predefined criteria. An object within a segment type does not have to be related to a segment in an unequivocal manner.

The invention thus provides for a creation or generation of new object classes on the basis of existing data objects by way of segmentation. This allows for direct access to inventory data through an object class without the need of administering individual assignments. As an advantage the invention leads to non-hierarchical data structures and minimized data volume.

The invention also covers a computer program with program coding means which are suitable for carrying out a process according to the invention as described above when the computer program is run on a computer. The computer program itself as well as stored on a computer-readable medium is claimed.

Further features and embodiments of the invention are defined in the dependent claims 2 to 6 and 8 to 12, respectively, and will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief description of the Drawings

In the drawings,
Figure 1 is a schematic view of a data assignment computer system according to the invention;
Figure 2 is a schematic block diagram representation of the system of the invention;
Figure 3 shows a more detailed block diagram of a data assignment system according to the invention;
Figure 4 shows the block diagram of Figure 3 in a configuration according to the diagram representation of Figure 2; and
Figure 5 shows a schematic illustration of an embodiment of the invention.

### Detailed Description

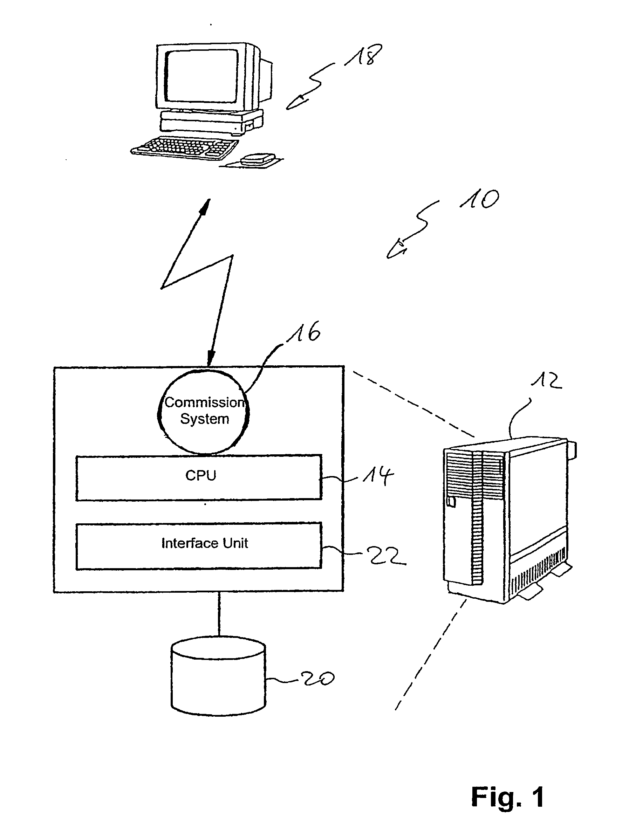

Figure 1 shows a schematic block diagram representation of a data assignment computer system 10 according to the present invention. Computer system 10 comprises a server or computer unit 12 with a central processing unit 14 and a connection with at least one input/output means 18. Further, a commission system 16 is installed and runs on the computer unit 12. Commission system 16 serves for determining, retrieving and calculating remuneration payments such as commissions, bonus payments etc. which are to be paid to employees or agents on the basis of achieved objectives. Still further, the computer unit comprises an interface unit 22 which links the computer unit 12 to a database system 20 with data objects stored thereon.

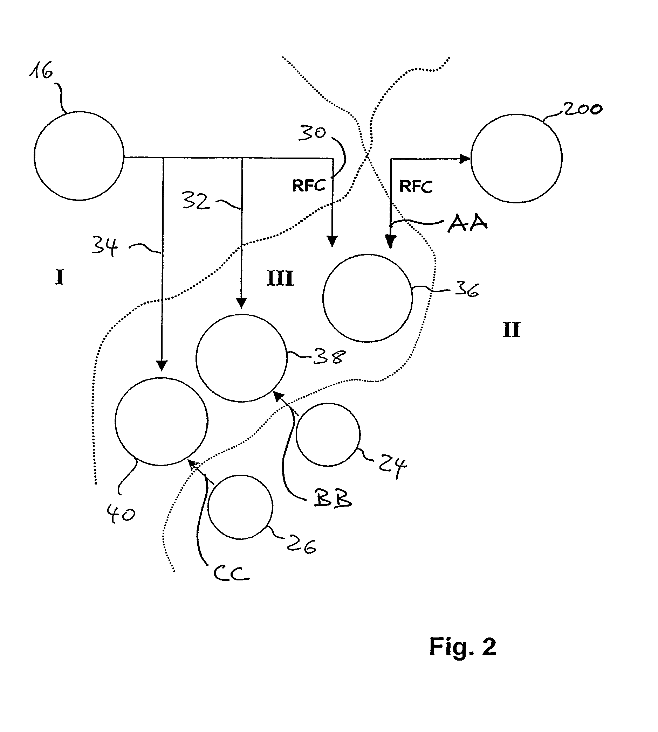

The system as shown in Figure 1 is used in the field of data assignment of (inventory) data objects. As already pointed out above, it is appropriate to classify data objects belonging to a data object component 200 (cf. Figure 2) into segments according to selectable criteria so that computing unit 12 can access selected/classified data objects via specific segment access in order to perform certain tasks.

Figure 2 depicts in more detail the data assignment system according to the invention. As can be seen from Figure 2, the system according to the invention particularly consists of three components, namely a first component I which comprises the commission system 16 (commission component), a second component II which comprises the data object component 200 (inventory component) and a third component III (segment type component) which may comprise a modelling tool (not shown) for creating new object classes (segment types). The segment type component III may also comprise administration tools (not shown) for administrating the objects of classes created by the modelling tool.

Commission component I manages any kind of commission contract or commission remuneration system which relates achieved objectives to an employee or agent and calculates a remuneration entitlement in favour of this employee or agent. The data object component 200 in the inventory component II can be any kind of business enterprise solution which stores and manages various kind of business data objects, such as financial services solutions, data mining solutions or business warehouse solutions. However, the inventory component II can also comprise additional subcomponents in which business objects can be stored and managed, such as a client management system 24 and/or a policy management system 26 which manage insurance policies and/or client contracts.

According to the invention, the segment type component III comprising a modelling tool is arranged and constructed to include an inventory assignment of segments created in the inventory component II such that, in case of an assignment enquiry by the computing unit 12, i.e. the commission component I, an assignment of one or more segments being inquired for is carried out in the segment type component III.

In the context of a commission system, a segment is a subset of an inventory. The segment can be arranged in different manners within a certain inventory. The type of inventory depends on the business and the field of business, e.g. insurance companies, software companies, car companies etc. The (external) segment relation defines the relationship between a segment and a commission contract stored in the commission system such as depicted with reference numerals 30, 32, 34 in Figure 2.The type of relation between the commission contract and the segment is defined via a commission relation agreement, i.e. whether a given commission case is triggered or not. In contrast to the above-mentioned external segment relations, internal segment relations would be the relation between segment constituents (objects) and segment structure (typical attributes being grouping, aggregation etc.).

The inventory of a business enterprise as stored in the inventory component II can be divided or classified in segments according to various criteria. For example, the segments can be related to employees or agents who are responsible for these segments, activities and achievements connected with said responsibility being remunerated by means of commissions.

According to the schematic block diagram of Figure 2, the commission system 16 is connected with the segment type component III via so-called logical services and remote function call (RFC) functional units (depicted by arrows 30, 32, 34). The RFC units provide access for the commission system 16 to the segment relation systems 36, 38, 40 of the segment type component III.

Inventory component II comprises a data object component 200 (such as a financial services or data mining system), and a first BZO system 36 of the interface component III is linked to this data object component 200 for reading and "managing" the data contained in the data object component 200. This first segment relation system 36 could be an agent system in which segment relations for data business objects of the data object component 200 are stored. Advantageously, the segment relations stored in the agent system 36 are based on keys or key terms or on rules. Further segment relation systems can be provided in the interface component in order to be able to retrieve according segment data from additional inventory systems 24, 26, such as a client segment relation system 38 and/or a policy segment relation system 40. External relations between data object component 200 and additional inventory systems 24 and 26 are depicted by reference numerals AA, BB and CC in Figure 2.

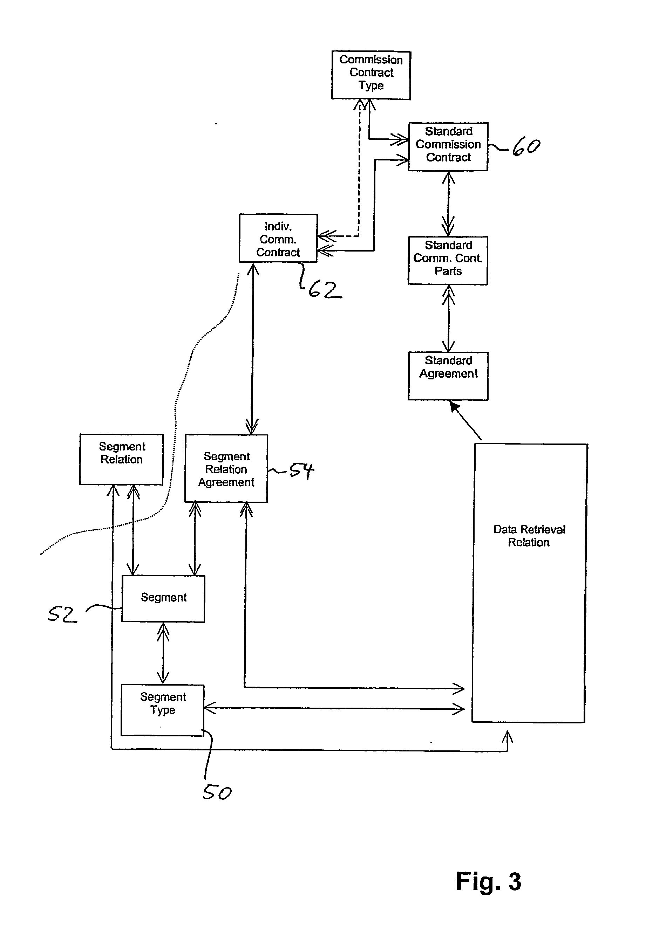

Segments according to the invention my be selectively "edited" by single object assignment or by description assignment, and a segment can retrieve the set of all assigned and segmented objects (cf. also Figure 3). An example for a single object assignment could be the allocation of a company XYZ to an object class "clients", an example for a description assignment could be the allocation of all clients with seat of business in country CC to an object class "countries".

A significant advantageous of the invention consists in the fact that no rules concerning segment relations have to be stored in the inventory component II as they are included in the interface component III according to the invention. Instead of a direct link between commission component I and inventory component II, according to the invention, commission component I accesses the data contained in the inventory component II via interface component III in which all necessary segment relation data (keys, rules) are stored. Thus, the interface component retrieves business data objects from the inventory component II on the basis of key terms and rules concerning various segment classification stored in the interface component III. For a given enquiry of the commission component I (i.e. commission system 16 running on computing unit 12) this enquiry is directed to the interface component III which internally retrieves the relevant data from data object component 200 on the basis of hitherto stored relations, keys, key terms and/or rules.

Referring now to Figure 3, in order to be able to map segments, individual segment types 50 have to be defined first in the customizing section of the user application according to the invention. Each segment type represents a certain way of looking at the inventory, i.e. various categories into which data objects of the inventory can be classified in. For each segment type 50, segments 52 can be defined according to the given criteria. In this context, it is to be pointed out that the arrows between the block diagram boxes in Figure 3 are so-called 1:n arrows, i.e. a single arrowhead stands for an unequivocal unambiguous relation, a double arrowhead stands for an equivocal ambiguous relation. For example, the segment type 50 is the basis for a plurality of segments 52 (double arrowhead pointing from 50 to 52) but each of the segments 52 is based on one and only one segment type (single arrowhead pointing from 52 to 50). This means that there is a 1:n relation between segment type and segment. The segment type defines which object type is the target of the segment generation and according to which criteria the generation of subsets is performed.

In the commission system 16, one or more segments 52 can be related individually to one or several individual commission contracts 62 (an individual commission contract being based via a 1:n relation on a standard commission contracts 60). The relation of the segment to the individual commission contract can be done, as depicted in the exemplary embodiment shown in Figure 3, via a segment relation agreement 54. Various types of relations can be maintained which is done via said segment relation agreement 54. The segment relation agreement controls the type of relationship between a commission contract and a segment, i.e. the system checks whether the cause for the existence of an additional commission case is identical for the related commission contract and the segment relation agreement. The segment relation agreement is related to a segment type in an unequivocal manner, and it can be created on the basis of a segment relation register contained in the data object component:

In terms of data modelling, a segment corresponds to a business object of a given business object type. A segment type in this context corresponds to a business object type with a certain characteristic or instance. An inventory can be divided or segmented into various segments according.to various criteria. In most business enterprises, segmenting can be performed in various combinations according to the following criteria:

| **inventory object type** | **business object type** | **business object** |
|---|---|---|
| i**nventory** | **segment type** | **segment (instance)** |
| area | area related criteria | e.g. region, county, postal code |
| product | product group related criteria | e.g. contracts, products, services |
| client | client group related criteria | e.g. private, business, industry |

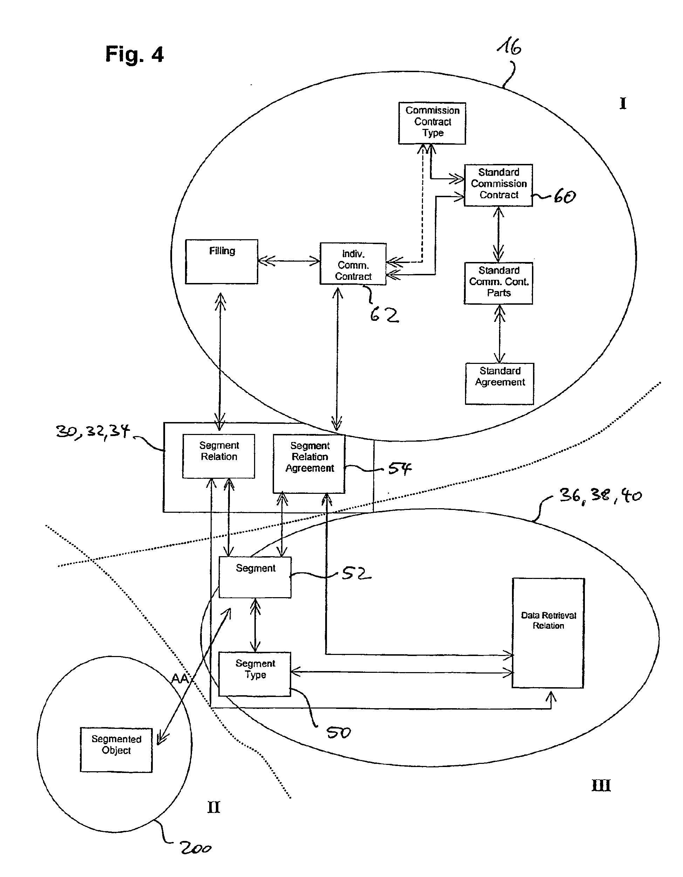

Figure 4 shows the configuration of Figure 3 in an arrangement according to Figure 2, i.e. the elements of Figure 3 are grouped and arranged in such a manner to illustrate to which of the components I, II, and III as described with reference to Figure 2 they belong to. As can be seen, the elements "Segment Type" 50 and "Segment" 52 as well as the element "Data Retrieval Relation" are comprised in the segment type component III where they are constituents of the segment relation systems 36, 38, 40. The element "Segmented Object" belongs to the data object component 200 in the inventory component II, and the remaining elements are grouped in the commission component I where the elements "Segment Relation" and Segment Relation Agreement" 54 are comprised in the functional units 30, 32, 34. The elements relating to the actual Commission Contract are comprised in the commission system 16.

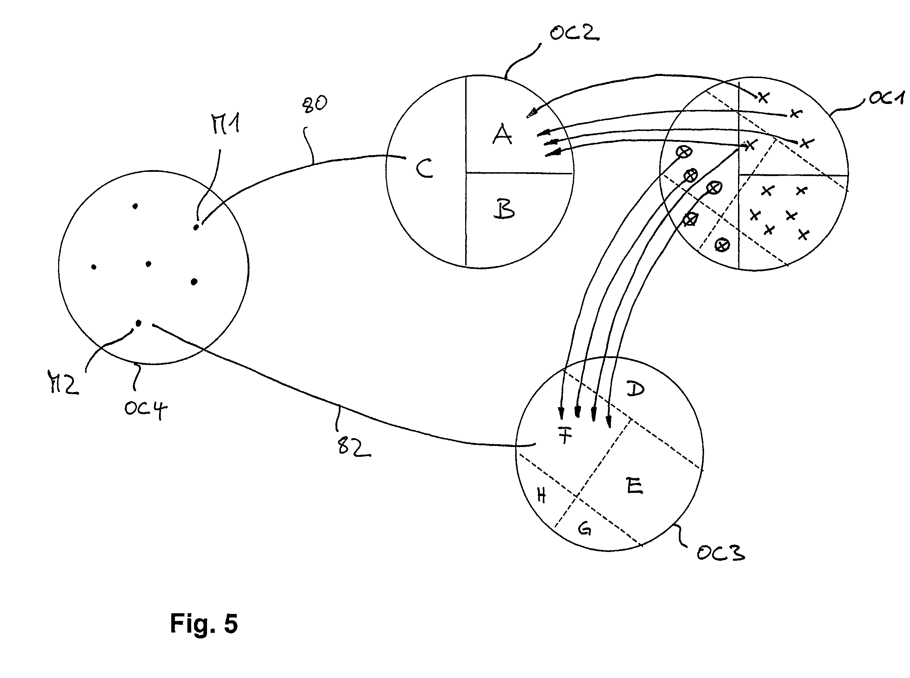

Figure 5 shows a schematic illustration of an embodiment of the invention by way of example for system according to the invention implemented in an insurance company. All of the clients (policy holders or insurance holders) of this insurance company constitute a set of data in an object class OC1. In the depiction of Figure 5, object classes are shown schematically as circles, and the data objects are shown as crosses.

According to the invention, segments can be created for the objects "policy holders" on the basis of rules defined by the user. For example, as shown in the embodiment of Figure 5, a classification of the policy holder objects in geographical areas results in the creation/segmentation of an object class OC2 with objects A, B, C, each of these segments representing a country, such as Germany (A), Austria (B) and Switzerland (C). Each of the newly created objects is assigned the according objects from object class "policy holders" OC1 having their seat in the according countries, respectively (this is illustrated by way of example only for the policy holder objects belonging to the object "Germany" A). It is to be understood that the delimitations of the three objects in object class OC2 is shown in object class OC1 for illustrative purposes only. The link between the objects of object class OC1 and the according respective object A, B, or C in object class OC2 can be realized by relation, description, formulas, copying or any other manner known to the person skilled in the art.

The objects "policy holders" of object class OC1 can be segmented according to a further rule, e.g. to an age group rule consisting in five age groups, as shown in Figure 5 by way of example by dashed delimitation lines. This segmentation creates a new object class "age group" OC3 with five segments or objects D, E, F, G, and H. Each of the new objects D, E, F, G, and H is assigned the according policy holder objects of object class OC1 (illustrated in Figure 5 for the example of the policy holders belonging to age group F only). Again, the dashed lines delimiting the objects D to H in the circle depiction of object class OC3 are shown in the circle of object class OC1 for illustrative purposes only.

Thus, there are three object classes OC1, OC2, and OC3, OC1 comprising 15 objects "policy holders", OC2 comprising three objects "countries", and OC3 comprising five objects "age groups".

Finally, there is a fourth object class in the embodiment of the invention as illustrated in Figure 5, namely object class OC4 comprising the employees of the insurance company (six objects shown as dots in the depiction of Figure 5). If, for example, a first employee M1 is in charge of all policy holders with seat in Switzerland, this is shown with a relation between object M1 of object class OC4 and object C of object class OC2. Object C of object class OC2 in turn is related (80) to all objects "policy holders" contained in object class OC1 having their seat in Switzerland (these objects being shown in Figure 5 as encircled crosses). The relation 80 between employee M1 and the clients with seat in Switzerland can contain further information or requirements, e.g. activities such as contract conclusion, client interview, contact person, etc.

A second employee M2 might be responsible for all clients belonging to age group F, which results in an according relation 82 pointing from object employee M2 of object class OC4 to object F of object class OC3, and the relation can again contain according activities as explained above in connection with relation 80, or other activities.

The invention thus provides for the possibility of looking at an inventory under various angles which allows an additional commissioning (remuneration). The additional commission is usually paid periodically dependent on the inventory, the segment type or, respectively, the segment. The remuneration can be dependent on amount, quality etc. of the segments. As an example, in many business fields, the term "inventory" usually stands for the complete set of our contracts and/or clients. Responsibility (i.e. being in charge of) of these inventory is usually compensated by means of a commission payment (inventory commission).

## Claims

1. A method for data assignment in a computer system (10), the computer system comprising
a computing unit (I, 12, 16);
a data object component (II, 200) for managing a set of data objects; and
an interface component (III, 22) interconnecting the computing unit (I, 12, 16) and the data object component (II, 200);
wherein the method comprises the steps of
dividing data objects of the set of data objects into segments (52) according to selectable criteria, by storing segment relation data in the interface component (III, 22);
creating, in the data object component (II, 200), an inventory assignment of segments (52); and
in case of an assignment inquiry by the computing unit (I, 12, 16), carrying out an assignment of one or more segments (52) being inquired for in the interface component (III, 22).

2. A method according to claim 1, comprising the step of creating new objects (A, B, C; D, E, F, G, H) by dividing an existing data objects class (OC1) into segments, the new objects forming a new object class (OC2; OC3).

3. A method according to claim 1, wherein the segment relations are based on rules.

4. A method according to any one of claims 1 to 3, comprising the step of defining a segment type (50) in the interface component (III, 22), the interface component (III, 22) containing one or more assignment rules for assigning data objects from the data object component (II, 200) to a given category in order to create one or more data object segments (52).

5. A method according to any one of claims 1 to 4, comprising the step of controlling the type of relationship between a query data object (62) of the computing unit (I, 12, 16) and a segment (52) by a segment relation agreement module (54) contained in the interface unit (22).

6. A method according to claim 5, comprising the step of creating the segment relation agreement module (54) on the basis of a segment relation register contained in the data object component (II, 200).

7. A computer system comprising
a computing unit (I, 12, 16); and
a data object component (II, 200) for managing a set of data objects;
wherein data objects of the set of data objects can be divided into segments (52) according to selectable criteria, by storing segment relation data in an interface component (III, 22)
the interface component (III, 22) interconnecting the computing unit (I, 12, 16) and the data object component (II, 200)and being arranged and constructed to include an inventory assignment of segments (52) created in the data object component (II, 200) such that, in case of an assignment inquiry by the computing unit (I, 12, 16), an assignment of one or more segments (52) being inquired for is carried out in the interface component (III, 22).

8. A computer system according to claim 7, wherein new objects (A, B, C; D, E, F, G, H) are created by dividing an existing data objects class (OC1) into segments, the new objects forming a new object class (OC2; OC3).

9. A computer system according to claim 7, wherein the segment relations are based on rules.

10. A computer system according to any one of claims 7 to 9, wherein in the interface component (III, 22) a segment type (50) can be defined containing one or more assignment rules for assigning data objects from the data object component (II, 200) to a given category in order to create one or more data object segments (52).

11. A computer system according to any one of claims 7 to 10, wherein the type of relationship between a query data object (62) of the computing unit (I, 12, 16) and a segment (52) is controlled by a segment relation agreement module (54) contained in the interface component (III, 22).

12. A computer system according to claim 11, wherein the segment relation agreement module (54) is created on the basis of a segment relation register contained in the data object component(II, 200).

13. A computer program with program coding means which are suitable for carrying out a method according to any one of claims 1 to 6 when the computer program is run on a computer.

14. A computer-readable medium with a computer program stored thereon, the computer program comprising program coding means which are suitable for carrying out a method according to any one of claims 1 to 6 when the computer program is run on a computer.

## Patentansprüche

1. Verfahren zur Datenzuweisung in einem Computersystem (10), wobei das Computersystem folgendes umfasst:
eine Recheneinheit (I, 12, 16),
eine Datenobjektkomponente (II, 200) zum Verwalten eines Satzes von Datenobjekten und
eine Schnittstellenkomponente (III, 22), welche die Recheneinheit (I, 12, 16) und die Datenobjektkomponente (II, 200) verbindet, wobei das Verfahren die folgenden Schritte umfasst:
Unterteilen von Datenobjekten des Satzes von Datenobjekten in Segmente (52) nach auswählbaren Kriterien durch Speichern von Segmentzuordnungsdaten in der Schnittstellenkomponente (III, 22),
Erzeugen einer Inventarzuweisung von Segmenten (52) in der Datenobjektkomponente (II, 200) und
Ausführen einer Zuweisung von einem oder mehreren in der Schnittstellenkomponente (III, 22) angefragten Segmenten (52) im Fall einer Zuweisungsanfrage durch die Recheneinheit (I, 12, 16).

2. Verfahren nach Anspruch 1, mit dem Schritt des Erzeugens neuer Objekte (A, B, C; D, E, F, G, H) durch Unterteilen einer existierenden Datenobjektklasse (OC1) in Segmente, wobei die neuen Objekte eine neue Objektklasse (OC2; OC3) bilden.

3. Verfahren nach Anspruch 1, wobei die Segmentzuordnungen auf Regeln beruhen.

4. Verfahren nach einem der Ansprüche 1 bis 3, mit dem Schritt des Definierens eines Segmenttyps (50) in der Schnittstellenkomponente (III, 22), wobei die Schnittstellenkomponente (III, 22) eine oder mehrere Zuweisungsregeln zum Zuweisen von Datenobjekten von der Datenobjektkomponente (II, 200) zu einer gegebenen Kategorie enthält, um ein oder mehrere Datenobjektsegmente (52) zu erzeugen.

5. Verfahren nach einem der Ansprüche 1 bis 4, mit dem Schritt des Steuerns des Beziehungstyps zwischen einem Abfragedatenobjekt (62) der Recheneinheit (I, 12, 16) und einem Segment (52) durch ein in der Schnittstelleneinheit (22) enthaltenes Segmentzuordnungs-Vereinbarungsmodul (54).

6. Verfahren nach Anspruch 5, mit dem Schritt des Erzeugens des Segmentzuordnungs-Vereinbarungsmoduls (54) auf der Grundlage eines in der Datenobjektkomponente (II, 200) enthaltenen Segmentzuordnungsregisters.

7. Computersystem mit
einer Recheneinheit (I, 12, 16) und
einer Datenobjektkomponente (II, 200) zum Verwalten eines Satzes von Datenobjekten,
wobei Datenobjekte des Satzes von Datenobjekten nach auswählbaren Kriterien durch Speichern von Segmentzuordnungsdaten in einer Schnittstellenkomponente (III, 22) in Segmente (52) unterteilt werden können,
wobei die Schnittstellenkomponente (III, 22) die Recheneinheit (I, 12, 16) und die Datenobjektkomponente (II, 200) verbindet und so eingerichtet und aufgebaut ist, dass sie eine Inventarzuweisung von in der Datenobjektkomponente (II, 200) erzeugten Segmenten (52) enthält, so dass im Fall einer Zuweisungsanfrage durch die Recheneinheit (I, 12, 16) eine Zuweisung von einem oder mehreren angefragten Segmenten (52) in der Schnittstellenkomponente (III, 22) ausgeführt wird.

8. Computersystem nach Anspruch 7, wobei neue Objekte (A, B, C; D, E, F, G, H) durch Unterteilen einer existierenden Datenobjektklasse (OC1) in Segmente erzeugt werden, wobei die neuen Objekte eine neue Objektklasse (OC2, OC3) bilden.

9. Computersystem nach Anspruch 7, wobei die Segmentzuordnungen auf Regeln beruhen.

10. Computersystem nach einem der Ansprüche 7 bis 9, wobei in der Schnittstellenkomponente (III, 22) ein Segmenttyp (50) definiert werden kann, der eine oder mehrere Zuweisungsregeln zum Zuweisen von Datenobjekten von der Datenobjektkomponente (II, 200) zu einer gegebenen Kategorie enthält, um ein oder mehrere Datenobjektsegmente (52) zu erzeugen.

11. Computersystem nach einem der Ansprüche 7 bis 10, wobei der Typ der Beziehung zwischen einem Abfragedatenobjekt (62) der Recheneinheit (I, 12, 16) und einem Segment (52) durch ein in der Schnittstellenkomponente (III, 22) enthaltenes Segmentzuordnungs-Vereinbarungsmodul (54) gesteuert wird.

12. Computersystem nach Anspruch 11, wobei das Segmentzuordnungs-Vereinbarungsmodul (54) auf der Grundlage eines in der Datenobjektkomponente (II, 200) enthaltenen Segmentzuordnungsregisters erzeugt wird.

13. Computerprogramm mit Programmcodemitteln, die geeignet sind, um ein Verfahren nach einem der Ansprüche 1 bis 6 auszuführen, wenn das Computerprogramm auf einem Computer ausgeführt wird.

14. Computerlesbares Medium mit einem darauf gespeicherten Computerprogramm, wobei das Computerprogramm Programmcodemittel aufweist, die geeignet sind, um ein Verfahren nach einem der Ansprüche 1 bis 6 auszuführen, wenn das Computerprogramm auf einem Computer ausgeführt wird.

## Revendications

1. Procédé pour l'affectation de données dans un système informatique (10), le système informatique comportant :
une unité de traitement (I, 12, 16),
un composant d'objets de données (II, 200) pour gérer un ensemble d'objets de données, et
un composant d'interface (III, 22) interconnectant l'unité de traitement (I, 12, 16) et le composant d'objets de données (II, 200),
dans lequel le procédé comporte les étapes consistant à :
diviser des objets de données de l'ensemble d'objets de données en segments (52) conformément à un critère sélectionnable, en mémorisant des données de relation de segment dans le composant d'interface (III, 22),
créer, dans le composant d'objets de données (II, 200), une affectation de stocks de segments (52), et
dans le cas d'une interrogation d'affectation par l'unité de traitement (I, 12, 16), effectuer une affectation d'un ou de plusieurs segments (52) faisant l'objet de l'interrogation dans le composant d'interface (III, 22).

2. Procédé selon la revendication 1, comportant l'étape de création de nouveaux objets (A, B, C ; D, E, F, G, H) en divisant une classe d'objets de données existante (OC1) en segments, les nouveaux objets formant une nouvelle classe d'objets (OC2 ; OC3).

3. Procédé selon la revendication 1, dans lequel les relations de segments sont basées sur des règles.

4. Procédé selon l'une quelconque des revendications 1 à 3, comportant l'étape de définition d'un type de segment (50) dans le composant d'interface (III, 22), le composant d'interface (III, 22) contenant une ou plusieurs règles d'affectation pour affecter des objets de données du composant d'objets de données (II, 200) à une catégorie donnée afin de créer un ou plusieurs segments d'objets de données (52).

5. Procédé selon l'une quelconque des revendications 1 à 4, comportant l'étape de commande du type de relation entre un objet de données de requête (62) de l'unité de traitement (I, 12, 16) et un segment (52) par un module d'agrément de relation de segment (54) contenu dans l'unité d'interface (22).

6. Procédé selon la revendication 5, comportant l'étape de création du module d'agrément de relation de segment (54) sur la base d'un registre de relation de segment contenu dans le composant d'objets de données (II, 200).

7. Système informatique comportant :
une unité de traitement (I, 12, 16), et
un composant d'objets de données (II, 200) pour gérer un ensemble d'objets de données,
dans lequel des objets de données de l'ensemble d'objets de données peuvent être divisés en segments (52) conformément à un critère sélectionnable, en mémorisant des données de relation de segment dans un composant d'interface (III, 22),
le composant d'interface (III, 22) interconnectant l'unité de traitement (I, 12, 16) et le composant d'objets de données (II, 200) et étant agencé et conçu de manière à inclure une affectation de stocks de segments (52) créés dans le composant d'objets de données (II, 200) de sorte que, dans le cas d'une interrogation d'affectation par l'unité de traitement (I, 12, 16), une affectation d'un ou de plusieurs segments (52) faisant l'objet de l'interrogation est réalisée dans le composant d'interface (III, 22).

8. Système informatique selon la revendication 7, dans lequel de nouveaux objets (A, B, C ; D, E, F, G, H) sont créés en divisant une classe d'objets de données existante (OC1) en segments, les nouveaux objets formant une nouvelle classe d'objets (OC2 ; OC3).

9. système informatique selon la revendication 7, dans lequel les relations des segments sont basées sur des règles.

10. Système informatique selon l'une quelconque des revendications 7 à 9, dans lequel, dans le composant d'interface (III, 22), un type de segment (50) peut être défini contenant une ou plusieurs règles d'affectation pour affecter des objets de données du composant d'objets de données (II, 200) à une catégorie donnée afin de créer un ou plusieurs segments d'objets de données (52).

11. Système informatique selon l'une quelconque des revendications 7 à 10, dans lequel le type de relation entre un objet de données de requête (62) de l'unité de traitement (I, 12, 16) et un segment (52) est commandé par un module d'agrément de relation de segment (54) contenu dans le composant d'interface (III, 22).

12. Système informatique selon la revendication 11, dans lequel le module d'agrément de relation de segment (54) est créé sur la base d'un registre de relation de segment contenu dans le composant d'objets de données (II, 200).

13. Programme informatique ayant des moyens de codage de programme qui sont adaptés pour exécuter un procédé selon l'une quelconque des revendications 1 à 6 lorsque le programme informatique est exécuté sur un ordinateur.

14. Support lisible par ordinateur sur lequel est mémorisé un programme informatique, le programme informatique comportant des moyens de codage de programme qui sont adaptés pour exécuter un procédé selon l'une quelconque des revendications 1 à 6 lorsque le programme informatique est exécuté sur un ordinateur.
